# EUROPEAN PATENT SPECIFICATION

(11) **EP 0 604 969 B1**
(45) Date of publication and mention of the grant of the patent: **08.03.2000**
(21) Application number: 93120985.2
(22) Date of filing: 27.12.1993
(51) Int. Cl.: C09C 1/00, H01B 1/08

(54) **Low-resistance conductive pigment and method of manufacturing same**
Niederohmiges, leitfähiges Pigment und sein Herstellungsverfahren
Pigment conducteur à faible résistance et son procédé de fabrication

(30) Priority: 28.12.1992 JP 36042892; 28.12.1992 JP 36042992; 28.12.1992 JP 36043092; 08.12.1993 JP 30832093
(43) Date of publication of application: 06.07.1994
(73) Proprietor: MITSUBISHI MATERIALS CORPORATION, Chiyoda-ku, Tokyo (JP)
(72) Inventor: Hayashi, Toshiharu, c/o Chuo Kenkyusho, Omiya-shi, Saitama-ken (JP); Sekiguchi, Masahiro, c/o Chuo Kenkyusho, Omiya-shi, Saitama-ken (JP); Nishihara, Akira, c/o Chuo Kenkyusho, Omiya-shi, Saitama-ken (JP)
(74) Representative: Winter, Brandl, Fürniss, Hübner, Röss, Kaiser, Polte, Kindermann Partnerschaft

(56) References cited:
- DATABASE WPI Week 9310, Derwent Publications Ltd., London, GB; AN 93-080134 & JP-A-5 024 837 (SUMITUMO METAL MINING CO.) 2 February 1993
- PATENT ABSTRACTS OF JAPAN vol. 13, no. 315 (C-619)18 July 1989 & JP-A-01 100 023 (TOSOH CO.) 18 April 1989
- DATABASE WPI Week 9002, Derwent Publications Ltd., London, GB; AN 90-010946 & JP-A-1 290 527 (TOSOH CO.) 22 November 1989
- DATABASE WPI Week 9336, Derwent Publications Ltd., London, GB; AN 93-285285 & JP-A-5 201 731 (MITSUBISHI MATERIALS CO.) 10 August 1993

## Description

### [DETAILED DESCRIPTION OF THE INVENTION]

### [FIELD OF THE INVENTION]

The present invention relates to a conductive pigment comprising indium oxide containing tin (hereinafter referred to as "ITO") crystal grains (said pigment is hereinafter also referred to as "ITO" pigment), a method of manufacturing same and applications thereof.

More particularly, the present invention relates to a conductive ITO pigment having a lower resistance and an improved color tone as compared with the conventional ITO pigments, a method of manufacturing same and applications thereof.

The conductive pigment of the present invention is suitable for forming a conductive film by mixing with a paint or ink. Particularly, by using an ITO pigment having an average primary particle size of up to 0.2 µm, a transparent conductive film useful as a transparent electrode or a transparent heating plate is available. By kneading the conductive pigment of the present invention With a resin, it is possible to manufacture a conductive resin.

### [PRIOR ART STATEMENT]

It has been the conventional practice to manufacture a transparent conductive film by depositing a metal or an inorganic oxide on a glass or resin substrate by a vapor deposition method such as vacuum deposition, sputtering or ion plating. Among others an ITO film is the most excellent in transparency, conductivity and stability and is particularly excellent in etching property by an acid (acid-solubility). It is therefore used in such applications as a transparent electrode in a liquid crystal display.

The vapor deposition method however requires an apparatus for producing a high vacuum (highly reduced pressure) needing a huge amount of investment, and is moreover defective in that the batch-type operations lead to a low productivity and it is difficult to achieve a large-area film. In the sputtering method which is the main current at present as a thin-film forming process, the ITO target has only a limited life with a low utilization rate of about 35 to 40%. Particularly when conducting etching for forming a circuit for electrode after formation of a thin film, the yield further decreases by the amount corresponding to removals. As a result, much of expensive indium is discarded without being effectively utilized, thus causing serious waste of resources. An ITO thin film formed by a vapor deposition method, having a high transparency, is tinted with a yellowish color, and this is pointed out as the problem of a low visibility.

With a view to solving the above-mentioned problem, it is being tried to form a transparent conductive circuit serving as an electrode by preparing a paint or ink by the use of an ITO pigment having an average primary particle size of up to a half the wave length of visible rays (i.e. up to 0.2 µm) as a conductive pigment and applying or printing same onto a substrate. It is true that this method is certainly excellent because of a low-cost manufacturing equipment, a satisfactory productivity, easy formation of a large-area film, a high yield and absence of wasted expensive indium.

A typical method for manufacturing such an ITO pigment comprises causing a mixed aqueous solution containing a water-soluble Sn⁴⁺ or Sn²⁺ compound and an In³⁺ compound to react with an aqueous alkaline solution, and calcining the resultant coprecipitating hydroxides of Sn and In (precursor hydroxides of ITO pigment) in the open air to cause conversion into an oxide. This method is suitable for industrially manufacturing a stable low-resistance ITO pigment.

However, the ITO pigment manufactured by this method shows a volume resistivity on 50 kg/cm² green compact of only 2 x 10¹ to 2 x 10⁰ Ω.cm about four digits as high as 1 x 10⁻³ to 2 x 10⁻⁴ Ω.cm of the already commercially applied sputtering thin film, even by trying to achieve a higher purity by limiting the concentration of impurity Cl⁻ ion contained in the ITO pigment, as is proposed in Japanese Patent Provisional Publication No. 5-201,731.

Even by forming a transparent conductive film from a paint or ink containing such an ITO pigment, therefore, the resultant thin film shows an excessively high surface resistance. This is why it has been impossible to form a thin film having a sufficient conductivity to permit industrialization as a transparent electrode. The conventional ITO pigment was tinted with yellow, and the transparent conductive film formed therefrom was also tinted with yellow, thus leading to a poor visibility.

JP-A-1100023 proposes a method for producing a low resistance ITO powder, characterized by partially deoxidating an ITO powder. In particular, by heating a yellow ITO powder having a particle size of 1 µm or less, preferably 0,1 µm or less, and a ratio of In/Sn from 95/5 to 85/15, in an inert gas atmosphere or reducing gas atmosphere or by previously incorporating a carbon source in said ITO powder and then heating said powder in an inert gas atmosphere or a reducing gas atmosphere at a heating temperature desirable from 200°C to 500°C, preferably from 200°C to 300°C, a yellowish green ITO powder having a resistance in the range of 0.1 to 0.8 Ω.cm is obtained.

### [PROBLEMS TO BE SOLVED]

An object of the present invention is to provide an ITO pigment having a lower resistance than in the conventional ITO pigments. More particularly, the present invention has an object to provide an ITO pigment having a volume resistivity, in the form of 50 kg/cm² green compact, of up to 8 x 10⁻¹ Ω.cm, or further more preferably, 8 x 10⁻² to 9 x 10⁻⁵ Ω.cm which is comparable with that of a sputtering thin film, and a method of manufacturing same.

An object of the present invention is also to provide an ITO pigment tinted with blue so as to permit formation of a transparent conductive film excellent in visibility, and a method of manufacturing same.

A further object of the present invention is to provide a conductive film forming composition and a conductive resin forming composition containing an ITO pigment, which permits formation of the product having a lower resistance than in the conventional ones.

These objects are solved by the conductive pigment in accordance with the features of claim 1 or 2.

### [MEANS TO SOLVE PROBLEMS]

To achieve the above-mentioned objects, the present inventors carried out extensive studies and obtained the following findings:
1) Modification of the surface of an ITO pigment into acidic leads to a higher conductivity, thus resulting in a volume resistivity, as measured as mentioned above, of under 2 x 10⁰ Ω.cm;
2) Increase in oxygen vacancy of an ITO pigment also leads to an improved conductivity, brings the volume resistivity to up to 8 x 10⁻¹ Ω.cm, and at the same time, changes the color of the pigment from conventional yellow to blue to grey-blue;
3) If the pigment surface is acidified and the oxygen vacancy is increased, the pigment has a low resistivity within a range of from 8 x 10⁻² to 9 x 10⁻⁵ Ω.cm and becomes tinted with blue as in 2) above.

The present invention was completed on the basis of these findings and may be summarized as follows:
(1) A conductive pigment comprising ITO crystal grains, which has an Sn content, relative to the total amount of In + Sn, within a range of from 1 to 15 mol%, an oxygen vacancy within a range of from 0.05 to 0.35 mol per mol of ITO crystal, a color tone of pigment relative to visible ray within a range of from 0.265 to 0.300 in terms of x-value and from 0.290 to 0.315 in terms of y-value in the xy chromaticity scale, and a volume resistivity within a range of from 8 x 10⁻¹ to 1 x 10⁻² Ω.cm.
(2) A conductive pigment comprising ITO crystal grains, which has an Sn content, relative to the total amount of In + Sn, within a range of from 1 to 15 mol%, a surface acidity within a range of from 8 x 10⁻⁷ to 1 x 10⁻⁵ mol /m²l , an oxygen vacancy within a range of from 0.05 to 0.35 mol per mol of ITO crystal, a color tone of pigment relative to visible ray within a range of from 0.265 to 0.300 in terms of x-value and from 0.290 to 0.315 in terms of y-value in the xy chromaticity scale, and a volume resistivity within a range of from 8 x 10⁻² to 9 x 10⁻⁵ Ω.cm.

In the present invention, the volume resistivity of ITO pigment means one measured by the four-probe method in the form of a green compact prepared under a pressure of 50 kg/cm².

The surface acidity is a value determined by the titration method described later.

The oxygen vacancy is a value determined by a measuring method described later.

The above-mentioned conductive pigment described in (1) above can be manufactured by heat-treating ITO crystal grains or a precursor hydroxide thereof having an Sn content, relative to the total content of In + Sn within a range of from 1 to 15 mol% at a temperature within a range of from over 500 to 1,150°C under a reduced pressure or in an inert gas atmosphere.

The above-mentioned conductive pigment described in (2) above can be manufactured by: (A) heat-treating ITO crystal grains or a precursor hydroxide thereof having an Sn content, relative to the total amount of In + Sn, within a range of from 1 to 15 mol%, at a temperature within a range of from 300 to 1,150°C under a reduced pressure or in an inert gas atmosphere, then (a) immersing same in at least an organic solvent selected from the group consisting of alcohol , ketone , ester and amine, and then, heat-treating same at a temperature of up to 500°C under a reduced pressure or in an inert gas atmosphere, or (b) heat-treating same at a temperature of up to 500°C in an inert gas atmosphere containing at least one selected from the group consisting of hydrogen, ammonia and carbon monoxide in an amount within a range of from 0.5 to 20 vol.%; or (B) heat-treating ITO crystal grains or a precursor hydroxide thereof having an Sn content, relative to the total amount of In + Sn within a range of from 1 to 15 mol% at a temperature within a range of from 300 to 1,150° C in an inert gas atmosphere containing at least one selected from the group consisting of hydrogen, ammonia and carbon monoxide in an amount within a range of from 0.5 to 20 vol.%.

The present invention provides also a conductive film forming composition containing a binder and any one of the above conductive pigments (1) and (2), and a conductive resin forming composition containing any one of the above conductive pigments (1) and (2).

### [FUNCTIONS]

Now, the construction of the present invention will be described, together with the functions thereof.

ITO has a high conductivity because trivalent In site of In₂O₃ crystal is substituted by tetravalent Sn which is a dopant to serve as an n-type donor and the electron density of multi-carriers in crystal grains (bulk) is increased by the action of the donor effect exhibited by the oxygen vacancy point caused by lattice defect.

Conductivity resulting from Sn, an n-type donor, is apparent particularly when the Sn content relative to the total amount of In + Sn is within a range of from 1 to 15 mol%, and outside this range, the volume resistivity of ITO pigment becomes higher. In the ITO pigment of the present invention, therefore, the Sn content relative to the total amount of In + Sn should be within a range of from 1 to 15 mol%, or more preferably, from 2 to 10 mol%.

The ITO pigment of the present invention is available by treating one manufactured by the conventional method described above. In the manufacture of this material ITO pigment, sources of Sn⁴⁺ or Sn²⁺ and In³⁺ ions used for the preparation of mixed aqueous solution containing ions of In and Sn may be any water-soluble compounds giving an acidic solution, and preferable sources include, for example, hydrochlorides, nitrates and mixtures thereof. The Sn content relative to the total amount of In + Sn should be adjusted within a range of from 1 to 15 mol%. On the other hand, there is no particular limitation for aqueous alkaline solution: alkaline metal compounds such as NaOH, KOH, Na₂CO₃, K₂CO₃, NaHCO₃ and KHCO₃, and ammonium compounds such as NH₄OH, (NH₄)₂CO₃, and NH₄HCO₃ may be used. However because an alkaline metal , if remaining in the ITO pigment, causes a decrease in conductivity, it is desirable to use an ammonium compound.

When the above-mentioned mixed aqueous solution reacts with an aqueous alkaline solution, In and Sn ions coprecipitate as hydroxides. More particularly, tin hydroxide/indium hydroxide coprecipitate, which are precursor hydroxides of ITO pigment, are precipitated. The reaction temperature may be the room temperature or about 90°C, and a reaction time of 30 to 60 minutes suffices in general, depending upon temperature.

An ITO pigment is available by filtering this tin hydroxide/indium hydroxide coprecipitate, sufficiently washing same as required, converting same into oxides through dehydration, and at the same time causing crystallization. The calcining temperature should preferably be adjusted within a range of from 300 to 1,150°C. A low calcining temperature results in a pigment having a small primary particle size (hereinafter simply referred to as "particle size") corresponding to a large specific surface area, whereas sufficient crystallization does not take place at a temperature lower than 300°C. While a higher calcining temperature causes grain growth, leading to a larger particle size of pigment, a temperature higher than 1,150°C results in excessive grain growth, causing coarsening of the average particle size to over 0.6 µm: this makes the product unsuitable as an ITO pigment. A calcining time sufficient to complete dehydration and crystallization suffices, varying with the calcining temperature. After calcining, aggregating particles may be broken by crushing as required.

In a preferred embodiment, the average primary particle size of the ITO pigment is up to 0.2 µm, or more preferably, within a range of from 0.01 to 0.1 µm, for imparting transparency. In order to obtain such particles, the calcining temperature should preferably be up to 1,050°C in general, or more preferably, within a range of from 300 to 900°C.

The ITO pigment manufactured by this conventional method shows, however, a volume resistivity higher than 2 x 10⁰ Ω.cm even by eliminating impurities through sufficient washing, and it is impossible to achieve a lower resistance. It has not therefore been possible to expect achievement of a volume resistivity of the order of 10⁻³ to 10⁻⁴ Ω.cm as is available in the vapor deposition method.

According to the present invention, it is now possible to further reduce volume resistivity by increasing surface acidity and/or oxygen vacancy of the ITO pigment.

### Surface acidity of ITO pigment

The present inventors gave attention to the acid site and the basic site present on the surface of ITO pigment, and measured the surface basicity and the surface acidity of various ITO pigments having different values of volume resistivity to analyze the effect of these acid and basic sites on the volume resistivity.

The surface acidity was determined by bringing the ITO pigment of a certain weight as weighed into sufficient contact with a 0.01N methylisobutylketone solution of tetra-butylammonium hydride, and then back-titrating the supernatant liquid with a 0.01N methylisobutylketone solution of perchloric acid. The surface basicity was in contrast determined by bringing the ITO pigment of a certain weight as weighed into sufficient contact with a 0.01N methylisobutylketone solution of perchloric acid, and then back-titrating the supernatant liquid with a 0.01N methylisobutylketone solution of tetrabutylammonium hydride. All these results are displayed as the acidity and basicity for the specific surface area of the ITO pigment as determined by the BET method.

These results suggest that the conventional ITO pigment has a surface basicity within a range of from 8 x 10⁻⁷ to 10⁻⁵ mol/m² and a very low surface acidity of about a tenth the basicity, thus revealing that the conventional pigment has a high basicity. A tendency is observed that a higher volume resistivity leads to a higher surface basicity and a lower volume resistivity corresponds to a lower surface basicity, and that a higher surface acidity results on the other hand in a lower volume resistivity. This is attributable to the fact that a lower basicity and hence a higher acidity of the ITO pigment surface correspond to an increased carrier electron density.

In order to reduce resistance of an ITO pigment to improve conductivity, therefore, it is effective to modify a high-basicity surface into a high-acidity surface. As a result of study to find a treating method of an ITO pigment permitting such surface improvement, possibility was found to remarkably increase surface acidity by immersing the ITO pigment in at least an organic solvent selected from the group consisting of alcohol, ketone, ester and amine, and then heat-treating same at a temperature of up to 500°C under a reduced pressure or in an inert gas atmosphere.

Examples of alcohol applicable for this surface modification include: methanol, ethanol, propanol, isopropanol, 1-butanol, 2-butanol, isobutanol, tertbutyl alcohol, hexanol, cyclohexanol, ethylene glycol, butoxyethanol, and 2-(2-butoxy) ethanol; examples of ketone include: acetone, methylethylketone, methylisobutylketone, 4-hydroxy-4-methyl-2-pentanone, cyclohexanone, isoholon, and diacetone alcohol; examples of ester include: ethyl acetate, butyl acetate, and butylcarbitol acetate; and examples of amine include: dimethylamine, tributylamine, ethanolamine, dimethylformamide, hydroxytetra-n-butylammonium, trimethylamine, dimethyl-sec-butylamine, cyclohexylamine, and ethylenediamine. A solvent or a mixed solvent of two or more of these solvents may be used. One or more organic solvents other than those enumerated above, such as hexane, may be mixed in.

It suffices to immerse the ITO pigment into the organic solvent at the room temperature. The solvent may be heated to the extent that evaporation of solvent does not become excessive. There is no particular limitation on the immersion time: a very short period of time such as several seconds to ten minutes usually suffices. Immersion may be continued for 30 minutes or more.

The ITO pigment having been immersed in the organic solvent is then heat-treated at a temperature of up to 500°C under a reduced pressure or in an inert gas atmosphere (eg., nitrogen, argon and helium) and dried. The heat-treatment temperature should preferably be within a range of from 50 to 400°C. A heat-treating time necessary for ensuring sufficient drying of the ITO pigment suffices, but a period of from five minutes to four hours is preferable, depending however on the temperature used. If a temperature is higher than 300°C, a period of up to an hour suffices. When heat-treating under a reduced pressure, the degree of vacuum should preferably be up to 13,33 Pa (10⁻¹ torr).

As another method for surface modification, application of a simple heat treatment, without conducting the above-mentioned immersion, of the ITO pigment obtained by the conventional method, at a temperature of up to 500°C in an inert gas atmosphere containing at least one selected from the group consisting of hydrogen (H₂), ammonia (NH₃), and carbon monoxide (CO) in an amount within a range of from 0.5 to 20 vol.%, can similarly increase the surface acidity as in the above-mentioned method. The preferable concentration (total concentration in the case of two or more gases) of H₂, NH₃ and/or CO contained in the inert gas (eg., nitrogen, argon and helium) is within a range of from 1 to 10 vol.%. With a concentration of under 0.5%, surface modification is insufficient, and a concentration of over 20 vol.% leads to easy occurrence of reduction into insulating InO or further into metallic In. The heat treatment temperature and the heat-treating time should preferably be the same as in the method as described above.

Irrespective of which of the above methods is adopted, the ITO pigment available after treatment shows a considerably decreased surface basic site, and a remarkably increased acid site as typically represented by a surface acidity within a range of from 8 x 10⁻⁷ to 1 x 10⁻⁵ mol/m². The surface acidity should preferably be within a range of from 1 x 10⁻⁶ to 5 x 10⁻⁶ mol/m². As a result of the increased surface acidity, this ITO pigment has an improved conductivity, with a volume resistivity of under 2 x 10⁰ or at least 2 x 10⁻² Ω.cm. In other words, resistance can be reduced by at least one to two digits even as compared with a non-treated ITO pigment.

### oxygen vacancy of ITO pigment

As described above, the oxygen vacancy site present in ITO crystal grains exerts a donor effect, increases the carrier electron density, and thus improves conductivity. As a result of studies carried out by the present inventors with this fact in view, it was found that heat treatment of an ITO pigment in an inert gas atmosphere or under a reduced pressure extracted oxygen from the ITO crystal grains, leading to an increased number of oxygen vacancy sites and hence to a decreased volume resistivity of the ITO pigment.

The resultant findings reveal an unexpected fact that, when the amount of oxygen vacancy sites (herein referred to as "oxygen vacancy") introduced by this heat treatment is within a range of from 0.05 to 0.35 mol per mol of ITO crystal, the carrier electron density is at its peak, reducing resistance, and at the same time, the conventional yellowish pigment changes its color into blue or grey-blue.

In the present invention, the term oxygen vacancy means the mol quantity of oxygen atoms extracted during treatment, i.e., the amount of oxygen vacancy sites introduced through the treatment, in an ITO pigment subjected to a treatment capable of extracting oxygen, as described above. The value of oxygen vacancy can therefore be relatively determined by comparing this amount with the amount of oxygen vacancy sites in another ITO pigment not subjected to a treatment for the extraction of oxygen. The oxygen vacancy is thus relatively determined because water and other oxygen-containing compounds are easily adsorbed onto the surface of the fine ITO pigment, and this makes it difficult to accurately determine quantitatively the amount of oxygen in the ITO pigment.

More specifically, the method of measuring the amount of oxygen vacancy is as follows. First, a sample of an ITO pigment subjected to an oxygen extracting treatment is dissolved in solid-solution form with alkali by the application of the alkali fusion method (fusion with sodium carbonate when determining In, and with sodium peroxide when determining Sn) , and the resultant salt is cooled and dissolved in distilled water into a solution. In and Sn are determined, respectively, through titration or high-frequency plasma emission spectrochemical analysis (ICP) by using this solution, and as required, impurities are determined as well by a known method. The amount of oxygen is determined by the gas analysis method (comprising melting and reducing the sample by the fusion method to reduce oxygen (O) in the sample into carbon monoxide (CO), and determing it by the infrared absorption method). The composition of the ITO pigment (SnₙIn₂₋ₙOₘ) is determined from the resultant data. In the same manner as above, the composition (SnₙIn₂₋ₙO_{m'}) of another ITO pigment manufactured by the same method except for the oxygen extracting treatment is determined. By subtracting the oxygen molar quantity (m-value) of the treated ITO pigment from the oxygen molar quantity (m'-value) of the non-treated ITO pigment, the amount of oxygen vacancy sites occurring in the oxygen extracting treatment, i.e., the oxygen vacancy, is determined. This amount calculable as [m' - m] means the number of moles of oxygen vacancy sites having occurred (number of extracted oxygen mols) per mol of ITO crystal. Since the Sn content relative to In + Sn is within a range of from 1 to 15 mol%, the n-value in the above formula of composition would be within a range of from 0.02 to 0.30.

According to the present invention, the oxygen vacancy thus determined should preferably be within a range of from 0.05 to 0.35 mol, or more preferably, from 0.10 to 0.30 mol per mol of ITO crystal. By doing this, the volume resistivity of the ITO pigment is within a range of from 8 x 10⁻¹ to 1 x 10⁻² Ω.cm, thus permitting achievement of reduction of resistance of at least one or two digits

Furthermore, the color tone of the ITO pigment subjected to an oxygen extracting treatment changes from the conventional yellowish one to blue or grey-blue. Measurement of color tone of this bluish pigment relative to visible rays by means of a color computer (manufactured by Suga Mfg. Co., Ltd.) demonstrates that the x-value is within a range of from 0.265 to 0.300, and the y-value, from 0.290 to 0.315 in the xy chromaticity scale. For the conventional yellowish non-treated ITO pigment, the x-value is within a range of from 0.265 to 0.348, and the y-value, from 0.316 to 0.475.

It is generally known that human visibility reacts most sensitively to rays of a wavelength of about 555 nm from among the visible ray wavelengths of from 380 to 780. A conductive film with a higher visibility can be formed by the above-mentioned bluish ITO pigment than by the conventional yellowish ITO pigment.

An ITO pigment manufactured by the method described above or a precursor hydroxide thereof (tin hydroxide/indium hydroxide coprecipitate) may be used as the ITO material for the oxygen extracting treatment. Oxygen extraction may be accomplished by heat-treating an ITO pigment or a precursor hydroxide at a temperature within a range of from 300 to 1,150°C under a reduced pressure or in an inert gas atmosphere. More specifically, application of heat treatment under a reduced pressure or in an inert gas atmosphere without immersing the surface into an organic solvent such as alcohol causes oxygen extraction.

Any of nitrogen, argon and helium and mixed gases thereof may be used as the inert gas. The pressure when heat-treating under a reduced pressure should preferably be up to 13,33 Pa (10⁻¹ torr). When the heat treatment temperature is high within the above-mentioned range, grain growth takes place during heat treatment as in calcining upon manufacturing an ITO pigment. An appropriate heat treatment temperature should therefore be selected in response to the particle size of the ITO pigment. For example, when the particle size of an ITO pigment is to be up to 0.2 µm, the heat-treating temperature should preferably be up to 1,050°C, or more preferably, within a range of from 300 to 900°C. An appropriate heat treating time is selected so that a prescribed amount of oxygen vacancy is produced by heat treatment, but a time longer than that in the above-mentioned heat treatment for surface modification is required in general. Usually, a time within a range of from 1 to 10 hours is desirable in the case where the material is an ITO pigment, and from 0.5 to 6 hours, when the material is a hydroxide. A precursor hydroxide, which has a large specific surface area, leads to a more rapid oxygen extraction. In all cases, a temperature of up to 500°C requires a heat treatment time of at least two hours for heat treatment.

When the material is a precursor hydroxide (coprecipitate hydroxide), this heat treatment is accompanied by dehydration and crystallization at the same time, and an ITO pigment having an oxygen vacancy within the above-mentioned range is obtained. In this case, the oxygen vacancy is determined through comparison with an ITO pigment obtained by calcining the coprecipitate hydroxides in the open air under the same conditions.

### Combination of surface modification and oxygen extraction

In a particularly preferred embodiment of the present invention, above-mentioned surface modification and oxygen extraction are simultaneously conducted. This makes it available a bluish ITO pigment having a resistance lower by five or more digits on the maximum than in the conventional one, as typically represented by a surface acidity within a range of from 8 x 10⁻⁷ to 1 x 10⁻⁵ mol/m², an oxygen vacancy within a range of from 0.05 to 0.35 mol per mol of ITO crystal, an x-value within a range of from 0.265 to 0.300 and a y-value, of from 0.290 to 0.315 in the xy chromaticity scale showing color tone of pigment relative to visible rays, and a volume resistivity within a range of from 8 x 10⁻² to 9 x 10⁻⁵ Ω.cm. This ITO pigment has a conductivity comparable with that of the conventional sputtering film, and is superior to the yellowish sputtering film in visibility.

Such an ITO pigment can be manufactured, with the ITO pigment prepared by the above-mentioned conventional method or its precursor hydroxide (In/Sn coprecipitate hydroxide) as the material , by first subjecting same to an oxygen extracting treatment as described above (i.e., heat treatment at a temperature within a range of from 300 to 1,150°C under a reduced pressure or in an inert gas atmosphere), and then conducting the above-mentioned surface modification [i.e., (a) immersing same in at least an organic solvent selected from the group consisting of alcohol, ketone, ester and amine, and then heat-treating same at a temperature of up to 500° C under a reduced pressure or in an inert gas atmosphere; or (b) heat-treating same at a temperature of up to 500°C in an inert gas atmosphere containing at least one of H₂, NH₃, and CO in an amount within a range of from 0.5 to 20 vol.%.

Preferred treatment conditions in this case may be as described above.

Another method of simultaneously accomplishing oxygen extraction and surface modification comprises heat-treating an ITO pigment or a precursor hydroxide at a temperature within a range of from 300 to 1,150°C in a reductive inert gas atmosphere containing at least one selected from the group consisting of H₂, NH₃ and CO in an amount within a range of from 0.5 to 20 vol.%. According to this method, it is possible to manufacture directly from the raw material only through a heat treatment an ITO pigment showing such properties as a surface acidity within a range of from 8 x 10⁻⁷ to 1 x 10⁻⁵ mol/m², an oxygen vacancy within a range of from 0.05 to 0.35 mol per mol of ITO crystal, a color tone of pigment relative to visible rays, as typically represented by an x-value within a range of from 0.265 to 0.300 and a y-value, from 0.290 to 0.315 in the xy chromaticity scale, and a volume resistivity within a range of from 8 x 10⁻² to 9 x 10⁻⁵ Ω.cm.

With a concentration of H₂, NH₃, and/or CO (the total concentration in the case of two or more of them) contained in the inert gas (eg., nitrogen, argon and helium) of under 0.5 vol.%, surface modification is insufficient. With a concentration of over 20 vol.%, on the other hand, reduction through insulating InO into metallic In easily takes place. The concentration should preferably be within a range of from 1 to 10 vol.%. An appropriate heat treatment temperature should be selected in response to the particle size of the target ITO pigment. The preferred ranges of heat treatment
temperature and heat treatment time are the same as those described above for the heat treatment for oxygen extraction.

The low-resistance ITO pigment of the present invention is applicable for the formation of a conductive film as a conductive film forming composition by mixing with a binder and as required with a solvent. The form of this composition may be any of paste, paint and ink. The amount of blended ITO pigment should preferably be within a range of from 50 to 90 wt.% relative to the aggregate sum of binder (solid) and ITO pigment. Kinds and amounts of binder, solvent and other arbitrary additives may be the same as the conventional ones. By applying or printing this composition onto a substrate and heating same for drying or setting, there is available a conductive film having a lower surface resistance than in the case of using a conventional ITO pigment. Particularly when the ITO pigment has been subjected to both surface modification and oxygen extraction, there is available a conductive film having a low resistance comparable with a sputtering film. If the ITO pigment has a particle size of up to 0.2 µm and the binder is transparent, a transparent conductive film is formed. When the ITO pigment has an oxygen vacancy within the above-mentioned range, the color tone of the transparent conductive film is tinted with blue, with a satisfactory visibility. This transparent conductive film is useful as a transparent electrode, transparent sheet-shaped heating element, electromagnetic wave shielding material, and antistatic film.

By kneading the low-resistance ITO pigment of the present invention with a resin, a conductive resin forming composition is available. The amount of blended ITO pigment in this case should preferably be within a range of from 50 to 85 wt.% relative to the aggregate sum of resin (solid) and ITO pigment. There is no particular limitation on the kind of resin: any resin may be used whether thermosetting or thermoplastic. A special resin such as silicone resin or fluororesin may be used. The conductive resin obtained from this composition is useful for such uses as an electronic circuit, electrode, electromagnetic wave shielding material and antistatic material.

### [EXAMPLES]

Now, the present invention will be described by means of examples. The examples shown are only illustrative and do not constitute any limitation on the present invention. In the examples, the symbol % represents wt.%, provided however that, the Sn content in ITO pigment is represented by mol% relative to the total content of In + Sn.

In the examples, the surface acidity, a surface basicity and oxygen vacancy were measured by the methods mentioned above. The volume resistivity was measured by the four-probe method on a green compact under 50 kg/cm². The primary particle size of pigment is the average particle size as measured by observing the pigment with a transmission type electron microscope. The specific surface area was measured by the BET method (N₂). Analysis of pigment was accomplished by the use of an aqueous solution prepared from the sample by the above-mentioned alkali fusion method, in accordance with the high-frequency plasma emission spectrochemical analysis (ICP) method for a metal element, and in accordance with the silver chloride colorimetric method. The oxygen content was analyzed by the above-mentioned gas analysis method. The Examples 1 to 9 are reference Examples which are not comprised within the scope of the claimed invention.

### [EXAMPLE 1]

Aqueous solution of InCl₃ (containing 300 g metallic In) in an amount of 900 mL was mixed with aqueous solution of 55% SnCl₄ in an amount of 26.5 g. The resultant mixed solution was caused to react for 30 minutes with 6L aqueous alkaline solution containing 1,800 g NH₄HCO₃ at a liquid temperature of 50°C, and decantation was repeatedly applied to the precipitate by means of ion-exchange water. At a point when an electric conductivity of the supernatant liquid becomes over 5,000 Ω.cm, In/Sn coprecipitate hydroxides were filtered, and after drying overnight at 110°C, calcined in the open air at 600°C for three hours. The product was then crushed to dissociate aggregates, and a yellow ITO pigment having an Sn content of 2,09 mol% in an amount of 369.5 g was obtained. This pigment (hereinafter the ITO available through calcination in the open air is called "non-treated ITO pigment) had a specific surface area of 37.5 m²/g, a primary particle size within a range of from 0.015 to 0.027 µm, a volume resistivity of 2.7 x 10² Ω.cm, a surface basicity of 7.3 x 10⁻⁶ mol/m², and a surface acidity of 6.8 x 10⁻⁷ mol/m².

Then, this non-treated ITO pigment in an amount of 50 g was immersed in 20 g ethanol at the room temperature for one minute, dried under a reduced pressure [0,133 Pa (10⁻³ torr)] at 100°C for 30 minutes, and cooled to the room temperature. This pigment after surface modification treatment had a surface acidity of 2.1 x 10⁻⁶ mol/m², almost disappearing surface basic sites, and a volume resistivity of 5.8 x 10⁻² Ω.cm, i.e., the resistance was reduced by about four digits by surface modification. Application of the surface modification treatment caused no change in the specific surface area and the primary particle size.

### [EXAMPLE 2]

The non-treated ITO pigment obtained in the Example 1 in an amount of 50 g was immersed in 20 g of methylethylketone at the room temperature for a minute, and after drying under a reduced pressure [13,33 Pa (10⁻¹ torr)] at a temperature of 300°C for ten minutes, cooled to the room temperature. After this treatment, the pigment had a surface acidity of 2.3 x 10⁻⁶ mol/m², most of surface basic sites having disappeared, volume resistivity of 4.8 x 10⁻² Ω.cm, a specific surface area of 31 m²/g and a primary particle size within a range of from 0.018 to 0.032 µm.

### [EXAMPLE 3]

The non-treated ITO pigment obtained in the Example 1 in an amount of 50 g was immersed in 20 g of ethylacetate at the room temperature for 30 minutes, and after heat treatment for ten minutes at 300°C in N₂ atmosphere in a silica tube, cooled to the room temperature. After this treatment, the pigment had a surface acidity of 2.2 x 10⁻⁶ mol/m², surface basic sites having almost disappeared, a volume resistivity of 5.0 x 10⁻² Ω.cm, a specific surface area of 30.2 m²/g, and a primary particle size within a range of from 0.017 to 0.030 µm.

### [EXAMPLE 4]

The non-treated ITO pigment obtained in the Example 1 in an amount of 50 g was immersed in a solution comprising 2 g tributylamine/20 g hexane at the room temperature for five minutes, and after heat treatment for ten minutes at 150°C in N₂ atmosphere in a silica tube, cooled to the room temperature. After this treatment, the pigment had a surface acidity of 2.0 x 10⁻⁶ mol/m², surface basic sites having alsmot disappeared, and a volume resistivity of 4.4 x 10⁻² Ω.cm. The surface modification caused no change in the specific surface area and the primary particle size of the pigment.

### [EXAMPLE 5]

The non-treated ITO pigment obtained in the Example 1 in an amount of 50 g was immersed in 20 g of ethanol at the room temperature for five minutes, and after drying under a reduced pressure [0,0133 Pa (10⁻⁴ torr)] for 60 minutes at 50°C, cooled to the room temperature. After this treatment, the pigment had a surface acidity of 2.5 x 10⁻⁶ mol/m², surface basic sites having almost disappeared, and a volume resistivity of 5.1 x 10⁻² Ω.cm. The surface modification caused no change in the specific surface area and the primary particle size of the pigment.

### [EXAMPLE 6]

An aqueous InCl₃ solution (containing 200 g metallic In) in an amount of 600 mL was mixed with an aqueous 55% SnCl₄ solution in an amount of 95 g, and after this aqueous mixed solution was caused to react with 6L alkaline solution containing 1,450 g NH₄HCO₃ at a liquid temperature of 70°C for an hour, decantation was repeatedly conducted to cause precipitation by means of ion-exchange water. At the point when electric conductivity of the supernatant liquid exceeded the level of 5,000 Ω.cm, the coprecipitate hydroxides were filtered, and after drying at 110°C overnight, the coprecipitate was calcined in the open air at 1,150°C for three hours, and crushed to give 268.5 g of ITO pigment having an Sn content of 10.3 mol%. This yellowish non-treated ITO pigment had a specific surface area of 3.1 m²/g, a primary particle size within a range of from 0.17 to 0.42 µm, a volume resistivity of 2.3 x 10⁰ Ω.cm, a surface basicity of 1.2 x 10⁻⁶ mol/m², and a surface acidity of 1.8 x 10⁻⁷ mol/m².

Then, this non-treated ITO pigment in an amount of 50 g was heat-treated at 300°C for 30 minutes through a mixed gas flow comprising 950 mL/min N₂ and 50 mL/min CO in a silica tube, and cooled to the room temperature. After this surface modification, the pigment had a surface acidity of 1.9 x 10⁻⁶ mol/m², surface basic sites having almost disappeared, a volume resistivity of 6.8 x 10⁻² Ω.cm. A reduction of resistance of almost two digits was achieved also in this surface modification. The treatment caused no change in the specific surface area and the primary particle size.

### [EXAMPLE 7]

The non-treated ITO pigment obtained in the Example 6 in an amount of 50 g was heat-treated at 50°C for 60 minutes through a mixed gas flow comprising 980 mL/min N₂ and 20 mL/min H₂ in a silica tube, and cooled to the room temperature. After this treatment, the pigment had a surface acidity of 2.0 x 10⁻⁶ mol/m², surface basic sites having almost disappeared, and a volume resistivity of 5.6 x 10⁻² Ω.cm. This treatment caused no change in the specific surface area and the primary particle size of the pigment.

### [EXAMPLE 8]

The non-treated ITO pigment obtained in Example 6 in an amount of 50 g was heat-treated at 50°C for 60 minutes through a mixed gas flow comprising 980 mL/min N₂ and 20 mL/min NH₃ in a silicale tube, and cooled to the room temperature. After this treatment, the pigment has a surfce acidity of 2.3 x 10⁻⁶ mol/m², surface basic sites having almost disappeared, a volume resistivity of 6.6 x 10⁻² Ω.cm/ The surface modification treatment caused no change in the specific surface area and the primary particle size of the pigment.

### [EXAMPLE 9]

An aqueous InCl₃ solution (containing 300 g metallic In) in an amount of 900 mL was mixed with an aqueous 55% SnCl₄ solution in an amount of 54.4 g, and after this aqueous mixed solution was caused to react with 6 L alkaline solution containing 1,800 g NH₄HCO₃ at a liquid temperature of 70°C for 60 minutes, decantation was repeatedly applied to the precipitate by means of ion-exchange water. At the point when electric conductivity of the supernatant liquid exceeded the level of 5,000 Ω.cm, the coprecipitate hydroxides were filtered, and after drying at 110°C overnight, the coprecipitate was calcined in the open air at 300°C for five hours, and crushed to give 371 g of ITO pigment having an Sn content of 4.2 mol%. The yellowish non-treated ITO pigment had a specific surface area of 118 m²/g, a primary particle size within a range of from 0.01 to 0.02 µm, a volume resistivity of 3.5 x 10² Ω.cm, a surface basicity of 7.2 x 10⁻⁶ mol/m², a surface acidity of 6.2 x 10⁻⁷ mol/m².

Then, this non-treated ITO pigment in an amount of 50 g was immersed in 20 g of methanol at the room temperature, and after drying under a reduced pressure [0,133 Pa (10⁻³ torr)] at 150°C for 60 minutes, cooled to the room temperature. After this treatment, the pigment had a surface acidity of 9.1 x 10⁻⁶ mol/m², surface basic sites having almost disappeared, a volume resistivity of 7.8 x 10⁻¹ Ω.cm, a specific surface area of 117 m²/g and a primary particle size within a range of from 0.01 to 0.02 µm.

### [COMPARATIVE EXAMPLE 1]

The non-treated ITO pigment obtained in the Example 1 in an amount of 50 g was immersed in 20 g of benzene at the room temperature for a minute, and after drying under vacuum [0,133 Pa (10⁻³ torr)] at a temperature of 100°C for 30 minutes, cooled to the room temperature. After this treatment, the pigment had a surface basicity of 7.2 x 10⁻⁶ mol/m², a surface acidity of 7.0 x 10⁻⁷ mol/m², and a volume resistivity of 2.5 x 10² Ω.cm. The immersion in benzene caused no remarkable change in the surface basicity/surface acidity and volume resistivity.

### [EXAMPLE 10]

A non-treated ITO pigment having an Sn content of 2.09 mol% was prepared in the same manner as in the Example 1 except however that the calcination temperature was changed from 600°C to 500°C. This pigment had a specific surface area of 92.5 m²/g, a primary particle size within a range of from 0.007 to 0.014 µm, a volume resistivity of 1.2 x 10² Ω.cm, and a color tone as represented by an x-value of 0.3632 and a y-value of 0.3859 on the xy chromaticity scale relative to visible rays. The pigment was in the form of yellow powder.

Then, 50 g of this non-treated ITO pigment were heat-treated at 500°C for four hours in N₂ atmosphere in a silica tube, and then cooled to the room temperature. The powder obtained presented grey-blue color.

For both the non-treated and the heat-treated pigments, results of ICP analysis revealed the presence of only Si , Ca and Na as impurities within a range of from 1 to 50 ppm, respectively. No other metal element was observed, and the Cl content as determined by the silver chloride colorimetric analysis was 26 ppm. For each of the non-treated and heat-treated pigments, the composition formula was determined from amounts of In and Sn as derived from ICP analysis, the amount of O by gas analysis, the weight of sample and the amounts of impurities as mentioned above, and the oxygen vacancy for the ITO pigments introduced through heat treatment was calculated. The oxygen vacancy per mol of ITO crystal (hereinafter simply referred to as the "oxygen vacancy") thus determined was 0.278 mol.

After the heat treatment, the pigment had a specific surface area of 85.8 m²/g, a primary particle size within a range of from 0.011 to 0.020 µm, a volume resistivity of 6.0 x 10⁻² Ω.cm, and a color tone as represented by an x-value of 0.2987 and a y-value of 0.3095 on the xy chromaticity scale relative to visible rays. By the above-mentioned heat treatment also, a reduction of resistance of almost four digits is possible, with simultaneous improvement of color tone.

### [EXAMPLE 11]

The non-treated ITO pigment obtained in the Example 10 in an amount of 50 g was heat-treaded under a reduced pressure of 6,66 Pa (5 x 10⁻² torr) at 600°C for six hours in a silica tube, and then cooled to the room temperature. After the heat treatment, the ITO pigment had blue-green color, an oxygen vacancy of 0.226 mol, a specific surface area of 68.0 m²/g, a primary particle size within a range of from 0.009 to 0.027 µm, a volume resistivity of 8.2 x 10⁻² Ω.cm, and a color tone relative to visible rays comprising an x-value of 0.2988 and a y-value of 0.3090 on the xy chromaticity scale.

### [EXAMPLE 12]

The non-treated ITO pigment obtained in the Example 10 in an amount of 50 g was heat-treated at 300°C for six hours in N₂ atmosphere in a silica tube, and then cooled to the room temperature. After the heat treatment, the pigment had blue-green color, an oxygen vacancy of 0.071 mol, a specific surface area of 67.1 m²/g, a primary particle size within a range of from 0.009 to 0.027 µm, a volume resistivity of 9.8 x 10⁻² Ω.cm, and a color tone relative to visible rays, comprising an x-value of 0.2980 and a y-value of 0.3055 on the xy chromaticity scale.

### [EXAMPLE 13]

The non-treated ITO pigment obtained in the Example 10 in an amount of 50 g was heat-treated at 1,150°C for three hours in N₂ atmosphere in a silica tube, and then cooled to the room temperature. After the heat treatment, the pigment had grey-blue color, an oxygen vacancy of 0.321 mol , a specific surface area of 1.4 m²/g, a primary particle size within a range of from 0.36 to 0.58 µm, a volume resistivity of 2.2 x 10⁻² Ω.cm, and a color tone as compared with visible rays, comprising an x-value of 0.2887 and a y-value of 0.3066 on the xy chromaticity scale.

### [EXAMPLE 14]

A non-treated ITO pigment, in an amount of 283 g, having an Sn content of 14.24 mol% was prepared in the same manner as in the Example 6, except however that the amount of aqueous 55% SnCl₄ solution was changed from 95 g to 137 g. This pigment had a specific surface area of 4.1 m²/g, a primary particle size within a range of from 0.19 to 0.40 µm, a volume resistivity of 7.5 x 10⁰ Ω.cm, and a color tone relative to visible rays, comprising an x-value of 0.324 and a y-value of 0.353 on the xy chromaticily scale. The pigment was yellow powder.

Then, 50 g of this non-treated ITO pigment were calcined at 500°C for five hours in N₂ atmosphere in a silica tube, and then cooled to the room temperature, resulting in a grey-blue pigment. After the heat treatment, the pigment had an oxygen vacancy of 0.190 mol, a specific surface area of 2.6 m²/g, a primary particle size within a range of from 0.30 to 0.36 µm, a volume resistivity of 5.4 x 10⁻² Ω.cm, and a color tone relative to visible rays, comprising an x-value of 0.2991 and a y-value of 0.3041 on the xy chromaticity scale.

Impurity concentrations of the individual non-treated and heat-treated ITO pigments are observed within a range of from 1 to 50 ppm only for Si, Ca and Na as metal elements, with a Cl content of 8 ppm.

### [EXAMPLE 15]

An aqueous InCl₃ solution (containing 300 g metal In), in an amount of 800 mL, was mixed with 80 g aqueous 55% SnCl₄ solution, and after causing this mixed solution to react with 6 L of an aqueous alkaline solution containing 1,800 g NH₄HCO₃ at a liquid temperature of 70°C for two hours, precipitate was repeatedly decanted by the use of ion-exchange water. At the point when electric conductivity of the supernatant liquid reached the level of 5,000 Ω.cm, the precipitate was filtered, and dried at 110°C overnight, resulting in In/Sn coprecipitate hydroxide, which was a precursor hydroxide of the ITO pigment, in an amount of 488 g.

Then, this coprecipitate hydroxide (ITO precursor hydroxide) in an amount of 50 g was heat-treated at 700°C for four hours in N₂ atmosphere in a silica tube, and then cooled to the room temperature to obtain a grey-blue ITO pigment.

The hydroxide obtained as above in an amount of 50 g was separately calcined in the open air at 700°C for four hours, resulting in a yellow ITO pigment.

In any of these ITO pigments, only Si, Ca and Na which were metal impurities were observed within a range of from 1 to 50 ppm, respectively, but no other element was found, with a Cl content of 20 ppm. The Sn content in all the pigments was 6.07 mol% in all cases.

The above-mentioned ITO pigment obtained by air-calcining hydroxide (hereinafter referred to as "non-treated ITO pigment") had a specific surface area of 34.0 m²/g, a primary particles size within a range of from 0.018 to 0.031 µm a volume resistivity of 3.0 x 10⁰ Ω.cm, and a color tone comprising an x-value of 0.340 and a y-value of 0.368 relative to visible rays on the xy chromaticity scale.

The above-mentioned ITO pigment obtained by heat-treating hydroxide in N₂ atmosphere, as compared with the non-treated ITO pigment, had an oxygen vacancy of 0.215 mol, a specific surface area of 21 m²/g, a primary particles size within a range of from 0.025 to 0.042 µm, a volume resistivity of 5.4 x 10⁻² Ω.cm, and a color tone comprising an x-value of 0.2906 and a y-value of 0.3048 relative to visible rays on the xy chromaticity scale.

### [EXAMPLE 16]

The grey-blue ITO pigment, in an amount of 50 g, having an Sn content of 2.09 mol, which had been obtained in the Example 10 by heat-treating at 500°C for four hours in N₂ atmosphere and cooled to the room temperature, was immersed in 20 g of ethanol for ten minutes at the room temperature, and afteer drying under vacuum [0,133 Pa(10⁻³ torr)] at 100°C for 30 minutes, cooled to the room temperature, for surface modification.

This ITO pigment after the surface modification treatment had an apparent color tone with no change, an oxygen vacancy of 0.27 mol, which was equal to that in the Example 10, and a specific surface area (85.8 m²/g) and a primary particle size (0.011 to 0.020 µm) with no change on the same level as in the Example 10.

This ITO pigment had a surface acidity of 3.5 x 10⁻⁶ mol/m² and almost no surface basic sites were observed. The non-treated ITO pigment before heat treatment in N₂ atmosphere had a surface basicity of 6.8 x 10⁻⁶ mol/m², on the other hand, whereas the ITO pigment of the Example 10 heat-treated in N₂ atmosphere had a surface basicity of 6. 1 x 10⁻⁶ mol/m², and the both pigments showed a surface acidity of about a tenth the surface basicity.

The ITO pigment after surface modification treatment had a volume resistivity of 6.8 x 10⁻³ Ω.cm, and a color tone comprising an x-value of 0.2968 and a y-value of 0.3080 relative to visible rays on the xy chromaticity scale. As compared with the volume resistivity (11.2 x 10² Ω.cm) of the non-treated (calcined at 500°C in the open air) ITO pigment, combination of generation of oxygen vacancies (heat-treated in N₂) and surface modification could reduce resistance by about five digits, and by about a digit even as compared with the case of heat treatment in N₂ alone or surface modification alone.

### [EXAMPLE 17]

The ITO pigment, in an amount of 50 g, which had been heat-treated at 600°C for six hours under a reduced pressure of 6,66 Pa (5 x 10⁻² torr) and cooled to the room temperature, as obtained in the Example 11, was immersed in 20 g of methylethyl ketone at the room temperature for ten minutes, and after drying under a reduced pressure at a temperature of 300°C for ten minutes, cooled to the room temperature, as a surface modification treatment.

After this surface modification treatment, the ITO pigment had an oxygen vacancy of 0.226 mol, a specific surface area of 68.0 m²/g, a primary particle size within a range of from 0.009 to 0.027 µm, a surface acidity of 3.0 x 10⁻⁶mol/m², a volume resistivity of 8.5 x 10⁻³ Ω.cm, and a color tone comprising an x-value of 0.2972 and a y-value of 0.3068 relative to visible rays on the xy chromaticity scale. The ITO pigment obtained in the Example 11 before surface modification treatment had, on the other hand, a surface basicity of 6.0 x 10⁻⁶ mol/m².

### [EXAMPLE 18]

The ITO pigment, in an amount of 50 g, which had been heat-treated at 300°C for six hours in N₂ atmosphere and cooled to the room temperature, as obtained in the Example 12, was immersed in 20 g of ethyl acetate at the room temperature for ten minutes, and then, after heat treatment at 300°C for ten minutes in N₂ atmosphere in a silica tube, cooled to the room temperature, as a surface modification treatment.

After this surface modification treatment, the ITO pigment had an oxygen vacancy of 0.071 mol, a specific surface area of 67.0 m²/g, a primary particle size within a range of from 0.009 to 0.027 µm a surface acidity of 1.1 x 10⁻⁶ mol/m², a volume resistivity of 8.7 x 10⁻³ Ω.cm, and a color tone comprising an x-value of 0.2970 and a y-value of 0.3025 relative to visible rays on the xy chromaticity scale. The ITO pigment obtained in the Example 12 before surface modification treatment had, on the other hand, a surface basicity of 4.5 x 10⁻⁷ mol/m².

### [EXAMPLE 19]

The ITO pigment, in an amount of 50 g, which had been heat-treated at 1,150°C for three hours in N₂ atmosphere and cooled to the room temperature, as obtained in the Example 13, was heat-treated again at 150°C for one hour in a mixed gas flow of 50 mL/min CO + 950 mL/min N₂ in a silica tube, and cooled to the room temperature as a surface modification treatment.

After this surface modification treatment, the ITO pigment had an oxygen vacancy of 0.321 mol, a specific surface area of 1.4 m²/g, a primary particle size within a range of from 0.36 to 0.58 µm, a surface acidity of 3.4 x 10⁻⁶ mol/m², a volume resistivity of 2.5 x 10⁻⁴ Ω.cm, and a color tone comprising an x-value of 0.2855 and a y-value of 0.3052 relative to visible rays on the xy chromaticity scale. The ITO pigment obtained in the Example 13 before surface modification treatment had, on the other hand, a surface basicity of 4.5 x 10⁻⁷ mol/m².

### [EXAMPLE 20]

In/Sn coprecipitate hydroxide (already washed and dried) (ITO precursor hydroxide), in an amount of 100 g, having an Sn content of 14.24 mol% obtained in the same manner as in the Example 6 except that the amount of aqueous 55% SnCl₄ solution was changed from 95 g to 137 g, was heat-treated at 400°C for three hours in a mixed gas flow comprising 10 mL/min H₂ + 990 mL/min N₂ in a silica tube, and then cooled to the room temperature to obtain a grey-blue ITO pigment.

In this ITO pigment, only Si , Ca and Na as metal elements were present as impurities within a range of from 1 to 50 ppm, respectively, with a Cl content of 8 ppm. This pigment had an oxygen vacancy of 0.315 mol, a surface acidity of 3.0 x 10⁻⁶ mol/m², a specific surface area of 74.5 m²/g, a primary particle size within a range of from 0.011 to 0.021 µm, a volume resistivity of 8.8 x 10⁻³ Ω.cm, and a color tone comprising an x-value of 0.2983 and a y-value of 0.3020 relative to visible rays on the xy chromaticity scale.

The non-treated ITO pigment obtained in the Example 14 by calcining the same coprecipitate hydroxide as that used as the raw material in this Example at 1,150°C for three hours in the open air showed a surface basicity of 5.9 x 10⁻⁶ mol/m².

### [EXAMPLE 21]

InSn coprecipitate hydroxide (already water-washed and dried), in an amount of 50 g, having an Sn content of 6.07 mol%, which had been prepared in the Example 15 as an ITO precursor hydroxide, was heat-treated at 700°C for three hours in a mixed gas flow comprising 5 mL/min NH₃ + 995 mL/min N₂ in a silica tube, and then cooled to the room temperature to obtain a grey-blue ITO pigment. This ITO pigment had the same impurity contents as in the Example 15.

This pigment had an oxygen vacancy of 0.306 mol, a surface acidity of 3.6 x 10⁻⁶ mol/m², a specific surface area of 37 m²/g, a primary particle size within a range of from 0.015 to 0.032 µm, a volume resistivity of 7,9 x 10⁻⁴ Ω.cm, and a color tone comprising an x-value of 0.2915 and a y-value of 0.3041 relative to visible rays on the xy chromaticity scale.

The non-treated ITO pigment obtained in the Example 15 by calcining the same coprecipitate as that used as the raw material in this Example at 750°C for four hours in the open air showed a surface basicity of 2.9 x 10⁻⁶ mol/m².

### [EXAMPLE 22]

In/Sn coprecipitate hydroxide (already water-washed and dried), in an amount of 50 g, having an Sn content of 4.2 mol%, which had been prepared in the Example 9 as an ITO precursor hydroxide, was heat-treated at 800°C for four hours in N₂ atmosphere in a silica tube, and then cooled to the room temperature to obtain a grey-blue ITO pigment. Then, this ITO pigment was immersed in 10 g of isophorone at the room temperature for ten minutes, dried under a reduced pressure [0,133 Pa (10⁻³ torr)] at 150°C for 20 minutes, and then, cooled to the room temperature as a surface modification treatment.

After this surface modification treatment, the ITO pigment had an oxygen vacancy of 0.211 mol, a specific surface area of 12.0 m²/g, a primary particle size within a range of from 0. 031, to 0.089 µm, a surface acidity of 3.7 x 10⁻⁶ mol/m², a volume resistivity of 9,7 x 10⁻⁵ Ω.cm, and a color tone comprising an x-value of 0.2853 and a y-value of 0.3031 relative to visible rays on the xy chromaticity scale. The ITO pigment before the surface modification treatment had, on the other hand, a surface basicity of 2.2 x 10⁻⁶ mol/m², and a surface acidity of 5.9 x 10⁻⁷ mol/m². Application of the surface modification treatment after oxygen extraction has made it possible to remarkably reduce resistance as compared with the Example 9.

### [COMPARATIVE EXAMPLE 2]

The Example 21 was repeated except that heat treatment was carried out with the use of a mixed gas flow comprising 300 mL/min NH₃ + 700 mL/min N₂. During the heat treatment, part of In₂O₃ was reduced into metal In and welded together. A fine powdery ITO pigment could not therefore be obtained.

### [EFFECTS OF THE INVENTION]

According to the present invention, it is possible to obtain a reduced-resistance conductive pigment by conducting a surface modification treatment for increasing surface acidity. A conductive pigment having a reduced resistance and excellent in visibility with a bluish tone of color is available with an oxygen vacancy within a range of from 0.05 to 0.35 mol, a color tone comprising an x-value of from 0.265 to 0.300 and a y-value of from 0.290 to 0.315 relative to visible rays on the xy chromaticity scale, and a volume resistivity within a range of from 8 x 10⁻¹ to 1 x 10⁻²Ω.cm, by applying a heat treatment permitting oxygen extraction from the conventional ITO pigment. Furthermore, application of a treatment permitting achievement of both the increase in surface acidity and the oxygen extraction as described above makes it possible to obtain a high-performance ITO pigment excellent in visibility with a further reduced resistance, which has a surface acidity within a range of from 8 x 10⁻⁷ to 1 x 10⁻⁵ mol/m², an oxygen vacancy within a range of from 0.05 to 0.35 mol, a color tone comprising an x-value of from 0.265 to 0.300 and a y-value of from 0.290 to 0.315, and a volume resistivity within a range of from 8 x 10⁻² to 9 x 10⁻⁵ Ω.cm. As a result, it is possible to form a conductive film excellent in visibility and tinted with blue, unlike the conventional yellowish sputtering film, provided with a low resistance well comparable with that of the sputtering film, by using such simple means as application or printing permitting easy scaling up. Particularly when the average primary particle size of an ITO pigment is 0.2 µm, a transparent conductive film having a high visibility is formed. This transparent conductive film is useful as a transparent electrode for a liquid-crystal display, an automotive wind-breaking glass, and a heating element with transparent surface for window.

## Claims

1. A conductive pigment comprising indium oxide crystal grains containing tin, wherein said pigment has an Sn content relative to the total amount of In + Sn within a range of from 1 to 15 mol%, an oxygen vacancy within a range of from 0.05 to 0.35 mol per mol of ITO crystal, a color tone of pigment relative to visible ray within a range of from 0.265 to 0.300 in terms of x-value and from 0.290 to 0.315 in terms of y-value in the xy chromaticity scale, and a volume resistivity, as measured by the four-probe method on 50 kg/cm² green compact, within a range of from 8 x 10⁻¹ to 1 x 10⁻² Ωcm.

2. A conductive pigment comprising indium oxide crystal grains containing tin, wherein said pigment has an Sn content relative to the total amount of In + Sn within a range of from 1 to 15 mol%, a surface acidity within a range of from 8 x 10⁻⁷ to 1 x 10⁻⁵ mol/m², an oxygen vacancy within a range of from 0.05 to 0.35 mol per mol of ITO crystal, a color tone of pigment relative to visible ray within a range of from 0.265 to 0.300 in terms of x-value and from 0.290 to 0.315 in terms of y-value in the xy chromaticity scale, and a volume resistivity, as measured by the four-probe method on 50 kg/cm² green compact, within a range of from 8 x 10⁻² to 9 x 10⁻⁵ Ωcm.

3. A conductive pigment as claimed in Claim 1 or 2, wherein said pigment has an average primary particle size of up to 0.2 µm.

4. A method of manufacturing a conductive pigment as claimed in Claim 1 or 3, which comprises the step of heat-treating indium oxide crystal grains or precursor hydroxide thereof containing tin having an Sn content relative to the total amount of In + Sn, within a range of from 1 to 15 mol% at a temperature within a range of from over 500°C to 1,150°C under a reduced pressure or in an inert gas atmosphere.

5. A method of manufacturing a conductive pigment as claimed in Claim 2 or 3, which comprises the steps of heat-treating indium oxide crystal grains or precursor hydroxide thereof containing tin having an Sn content relative to the total amount of In + Sn, within a range of from 1 to 15 mol% at a temperature within a range of from 300 to 1,150°C under a reduced pressure or in an inert gas atmosphere, then immersing same in at least an organic solvent selected from the group consisting of alcohol, ketone, ester and amine, and then heat-treating same at a temperature of up to 500°C under a reduced pressure or in an inert gas atmosphere.

6. A method of manufacturing a conductive pigment as claimed in Claim 2 or 3, which comprises the steps of heat-treating indium oxide crystal grains or precursor hydroxide thereof containing tin having an Sn content relative to the total amount of In + Sn within a range of from 1 to 15 mol% at a temperature within a range of from 300 to 1,150°C under a reduced pressure or in an inert gas atmosphere, and then heat-treating same at a temperature of up to 500°C in an inert gas atmosphere containing at least one selected from the group consisting of hydrogen, ammonia and carbon monoxide in an amount within a range of from 0.5 to 20 vol.%.

7. A method of manufacturing a conductive pigment as claimed in Claim 2 or 3, which comprises the step of heat-treating indium oxide crystal grains or precursor hydroxide thereof containing tin having an Sn content relative to the total amount of In + Sn within a range of from 1 to 15 mol% at a temperature within a range of from 300 to 1,150°C in an inert gas atmosphere containing at least one selected from the group consisting of hydrogen, ammonia and carbon monoxide in an amount within a range of from 0.5 to 20 vol.%.

8. A conductive film forming composition containing a binder and a conductive pigment as claimed in any one of claims 1 to 3.

9. A conductive resin forming composition containing a resin and a conductive pigment as claimed in any one of claims 1 to 3.

## Patentansprüche

1. Leitfähiges Pigment umfassend Indiumoxid-Kristallkörner enthaltend Zinn, wobei das Pigment einen Sn-Anteil innerhalb eines Bereichs von 1 bis 15 Mol-% in Bezug auf die Gesamtmenge aus In + Sn, eine Sauerstoffvakanz innerhalb eines Bereichs von 0,05 bis 0,35 Mol pro Mol ITO-Kristall, einen Pigmentfarbton in Bezug auf sichtbare Strahlung innerhalb eines Bereichs von 0,265 bis 0,300 bezüglich des x-Werts und von 0,290 bis 0,315 bezüglich des y-Werts in der xy-Farbtafel sowie einen spezifischen Volumenwiderstand, gemessen durch die Viersondenmethode an einem 50 kg/cm² Grünling, innerhalb eines Bereichs von 8 x 10⁻¹ to 1 x 10⁻² Ωcm hat.

2. Leitfähiges Pigment umfassend Indiumoxid-Kristallkörner enthaltend Zinn, wobei das Pigment einen Sn-Anteil innerhalb eines Bereichs von 1 to 15 Mol-% in Bezug auf die gesamte Menge aus In + Sn, eine Oberflächenacidität innerhalb eines Bereichs von 8 x 10⁻⁷ bis 1 x 10⁻⁵ mol/m², eine Sauerstoffvakanz innerhalb eines Bereichs von 0,05 to 0,35 mol pro mol ITO-Kristall, einen Pigmentfarbton in Bezug auf sichtbare Strahlung innerhalb eines Bereichs von 0,265 bis 0,300 bezüglich des x-Werts und von 0,290 bis 0,315 bezüglich des y-Werts in der xy-Farbtafel sowie einen spezifischen Volumenwiderstand, gemessenen durch das Viersondenverfahren an einem 50 kg/cm² Grünling, innerhalb eines Bereichs von 8 x 10⁻² to 9 x 10⁻⁵ Ωcm hat.

3. Leitfähiges Pigment nach Anspruch 1 oder 2, wobei das Pigment eine durchschnittliche primäre Partikelgröße von bis zu 0,2 µm hat.

4. Verfahren zur Herstellung eines leitfähigen Pigments nach Anspruch 1 oder 3, das den Schritt einer Wärmebehandlung von Indiumoxid-Kristallkörnern oder deren Vorläuferhydroxid enthaltend Zinn, mit einem Sn-Anteil innerhalb eines Bereichs von 1 bis 15 Mol-% in Bezug auf die Gesamtmenge aus In + Sn, bei einer Temperatur innerhalb eines Bereichs von über 500°C bis 1150°C unter einem reduzierten Druck oder in einer Inertgasatmospähre beinhaltet.

5. Verfahren zur Herstellung eines leitfähigen Pigments nach Anspruch 2 oder 3, das die Schritte einer Wärmebehandlung von Indiumoxid-Kristallkörnern oder deren Vorläuferhydroxid enthaltend Zinn, mit einem Sn-Anteil innerhalb eines Bereichs von 1 bis 15 Mol-% in Bezug auf die Gesamtmenge aus In + Sn, bei einer Temperatur innerhalb eines Bereichs von 300 bis 1150°C unter reduziertem Druck oder in einer Inertgasatmosphäre, einem anschließenden Eintauchen derselben in wenigstens ein organisches Lösungsmittel, das aus der Gruppe bestehend aus Alkohol, Keton, Ester and Amin gewählt wird, und einer anschließenden Wärmebehandlung derselben bei einer Temperatur von bis zu 500°C unter einem reduziertem Druck oder in einer Inertgasatmosphäre beinhaltet.

6. Verfahren zur Herstellung eines leitfähigen Pigments nach Anspruch 2 oder 3, das die Schritte einer Wärmebehandlung von Indiumoxid-Kristallkörnern oder deren Vorläuferhydroxid enthaltend Zinn, mit einem Sn-Anteil innerhalb eines Bereichs von 1 bis 15 Mol-% in Bezug auf die Gesamtmenge aus In + Sn, bei einer Temperatur innerhalb eines Bereichs von 300 bis 1150°C unter einem reduzierten Druck oder in einer Inertgasatmosphäre und einer anschließenden Wärmebehandlung derselben bei einer Temperatur von bis zu 500°C in einer Inertgasatmosphäre enthaltend wenigstens einen Stoff aus der Gruppe bestehend aus Wasserstoff, Ammoniak und Kohlenmonoxid in einer Menge innerhalb eines Bereichs von 0,5 to 20 Vol.-% beinhaltet.

7. Verfahren zur Herstellung eines leitfähigen Pigments nach Anspruch 2 oder 3, das den Schritt einer Wärmebehandlung von Indiumoxid-Kristallkörnern oder deren Vorläuferhydroxid enthaltend Zinn mit einem Sn-Anteil innerhalb eines Bereichs von 1 to 15 Mol-% in Bezug auf die Gesamtmenge aus In + Sn, bei einer Temperatur innerhalb eines Bereichs von 300 to 1150°C in einer Inertgasatmosphäre enthaltend wenigstens einen Stoff aus der Gruppe bestehend aus Wasserstoff, Ammoniak und Kohlenmonoxid in einer Menge innerhalb eines Bereichs von 0,5 to 20 Vol.% beinhaltet.

8. Zusammensetzung bildend einen leitfähigen Film, enthaltend ein Bindemittel und ein leitfähiges Pigment nach einem der Ansprüche 1 bis 3.

9. Zusammensetzung bildend einen leitfähigen Film, enthaltend Harz und ein leitfähiges Pigment nach einem der Ansprüche 1 bis 3.

## Revendications

1. Pigment conducteur comprenant des grains de cristaux d'oxyde d'indium contenant de l'étain, dans lequel ledit pigment a une teneur en Sn par rapport à la quantité totale de In+Sn comprise dans la gamme de 1 à 15% en moles, une lacune d'oxygène comprise dans la gamme de 0,05 à 0,35 mole par mole de cristal d'ITO, une teinte de couleur de pigment par rapport au rayonnement visible comprise dans la gamme de 0,265 à 0,300 en termes de valeur x et de 0,290 à 0,315 en termes de valeur y dans l'échelle de chromaticité xy, et une résistivité en volume, telle qu'elle est mesurée par la méthode à 4 sondes sur un comprimé crû formé sous une pression de 50 kg/cm², comprise dans la gamme de 8x10⁻¹ à 1x10⁻² Ωcm.

2. Pigment conducteur comprenant des grains de cristaux d'oxyde d'indium contenant de l'étain, dans lequel ledit pigment a une teneur en Sn par rapport à la quantité totale de In+Sn comprise dans la gamme de 1 à 15% en moles, une acidité de surface comprise dans la gamme de 8x10⁻⁷ à 1x10⁻⁵ mole/m², une lacune d'oxygène comprise dans la gamme de 0,05 à 0,35 mole par mole de cristal d'ITO, une teinte de couleur de pigment par rapport au rayonnement visible comprise dans la gamme de 0,265 à 0,300 en termes de valeur x et de 0,290 à 0,315 en termes de valeur y dans l'échelle de chromaticité xy, et une résistivité en volume, telle qu'elle est mesurée par la méthode à 4 sondes sur un comprimé crû formé sous une pression de 50 kg/cm², comprise dans la gamme de 8x10⁻² à 9x10⁻⁵ Ωcm.

3. Pigment conducteur suivant les revendications 1 ou 2, dans lequel ledit pigment a une dimension particulaire primaire moyenne allant jusqu'à 0,2 µm.

4. Procédé de fabrication d'un pigment conducteur suivant les revendications 1 ou 3, qui comprend l'étape de traitement thermique des grains de cristaux d'oxyde d'indium ou d'hydroxide précurseur de ceux-ci contenant de l'étain ayant une teneur en Sn par rapport à la quantité totale de In+Sn comprise dans la gamme de 1 à 15% en moles, à une température comprise dans la gamme de plus de 500 à 1.150°C sous une pression réduite ou dans une atmosphère de gaz inerte.

5. Procédé de fabrication d'un pigment conducteur suivant les revendications 2 ou 3, qui comprend les étapes de traitement thermique des grains de cristaux d'oxyde d'indium ou d'hydroxide précurseur de ceux-ci contenant de l'étain ayant une teneur en Sn par rapport à la quantité totale de In+Sn comprise dans la gamme de 1 à 15% en moles, à une température comprise dans la gamme de 300 à 1.150°C sous une pression réduite ou dans une atmosphère de gaz inerte, puis d'immersion de ceux-ci dans au moins un solvant organique choisi dans le groupe consistant en alcool, cétone, ester et amine, et ensuite de traitement thermique de ceux-ci à une température allant jusqu'à 500°C sous une pression réduite ou dans une atmosphère de gaz inerte.

6. Procédé de fabrication d'un pigment conducteur suivant les revendications 2 ou 3, qui comprend les étapes de traitement thermique des grains de cristaux d'oxyde d'indium ou d'hydroxide précurseur de ceux-ci contenant de l'étain ayant une teneur en Sn par rapport à la quantité totale de In+Sn comprise dans la gamme de 1 à 15% en moles, à une température comprise dans la gamme de 300 à 1.150°C sous une pression réduite ou dans une atmosphère de gaz inerte, et ensuite de traitement thermique de ceux-ci à une température allant jusqu'à 500°C dans une atmosphère de gaz inerte contenant au moins un gaz choisi dans le groupe consistant en hydrogène, ammoniac et monoxyde de carbone en une quantité comprise dans la gamme de 0,5 à 20% en volume.

7. Procédé de fabrication d'un pigment conducteur suivant les revendications 2 ou 3, qui comprend l'étape de traitement thermique des grains de cristaux d'oxyde d'indium ou d'hydroxide précurseur de ceux-ci contenant de l'étain ayant une teneur en Sn par rapport à la quantité totale de In+Sn comprise dans la gamme de 1 à 15% en moles, à une température comprise dans la gamme de 300 à 1.150°C dans une atmosphère de gaz inerte contenant au moins un gaz choisi dans le groupe consistant en hydrogène, ammoniac et monoxyde de carbone en une quantité comprise dans la gamme de 0,5 à 20% en volume.

8. Composition formant un film conducteur contenant un liant et un pigment conducteur suivant l'une quelconque des revendications 1 à 3.

9. Composition formant une résine conductrice contenant une résine et un pigment conducteur suivant l'une quelconque des revendications 1 à 3.
